# FASCICULE DE BREVET EUROPEEN

(11) **EP 3 268 150 B1**
(45) Date de publication et mention de la délivrance du brevet: **23.08.2023**
(21) Numéro de dépôt: 16713539.1
(22) Date de dépôt: 04.03.2016
(51) Int. Cl.: B22D 11/00, B22D 11/10, B22D 27/04, C30B 15/08, C30B 29/52

(54) **PROCÉDÉ DE FABRICATION DE PIÈCES DE TURBOMACHINE, ÉBAUCHE ET PIÈCE FINALE**
VERFAHREN ZUR HERSTELLUNG VON TURBOMASCHINENKOMPONENTEN, ROHLING UND ENDGÜLTIGE KOMPONENTE
METHOD FOR MANUFACTURING TURBOMACHINE COMPONENTS, BLANK AND FINAL COMPONENT

(30) Priorité: 12.03.2015 FR 1552055
(43) Date de publication de la demande: 17.01.2018
(73) Titulaire: SAFRAN AIRCRAFT ENGINES, 75015 Paris (FR)
(72) Inventeur: MARTIN, Guillaume, 77550 Moissy-Cramayel (FR); MARCILLAUD, Céline, Jeanne, 77550 Moissy-Cramayel (FR); MINEUR-PANIGEON, Marie, 77550 Moissy-Cramayel (FR)
(74) Mandataire: Ernest Gutmann - Yves Plasseraud S.A.S.
(86) Numéro de dépôt international: PCT/FR2016/050507
(87) Numéro de publication internationale: WO 2016/142611

(56) Documents cités:
- WO-A1-01/62992
- WO-A1-2011/104795
- WO-A2-2014/057208
- WO-A2-2014/057222

## Description

La présente invention concerne un procédé de fabrication de pièces métalliques de turbomachine, et en particulier d'aubes de roue mobiles de turbine d'un turboréacteur ou d'un turbopropulseur d'avion.

Est concerné un alliage composé intermétallique titane-aluminium. Le TiAI 48-2-2 est spécifiquement visé.

Est aussi concerné dans la présente description un ensemble comprenant une ébauche d'une pièce de turbomachine en un tel alliage à base de TiAI et une pièce usinée issue de l'usinage de cette ébauche.

Un alliage forme un composé intermétallique pour certaines compositions chimiques et sous certaines conditions de pression et de température. Contrairement à un alliage classique, où des atomes de natures différentes peuvent être répartis aléatoirement sur un même site cristallographique, un composé intermétallique est constitué de l'alternance périodique d'atomes. Ainsi, lorsque l'on regarde une maille élémentaire, on voit ressortir une structure cristalline.

La mise en forme par fonderie d'une pièce en alliage intermétallique titane-aluminium, est extrêmement difficile et ne permet pas à l'heure actuelle de fondre des épaisseurs suffisamment fines pour réaliser, de fonderie, des pièces avec des zones finies de fonderie.

Parvenir à usiner de façon performante une pièce issue de fonderie est par ailleurs difficile.

Deux catégories de problèmes en découlent :
- ceux liés à la fonderie,
- ceux liés à l'usinage,
- le tout à considérer dans un cadre économique.

Dans la technique connue, il existe notamment les solutions qui suivent :
1) une solution prévoyant l'obtention d'un brut sur-épaissi par fonderie à la cire perdue, puis l'usinage de ce brut pour obtenir la pièce finale, telle une aube,
2) une solution de coulage d'ébauche à la forme quasi définitive de la pièce (dite « Near Net Shape ») permettant ensuite un usinage certes peu important (avec peu de perte de matière) de la pièce finale, mais qui demeure nécessaire,
3) et une solution par fonderie dans un moule permanent centrifugé, où on peut prévoir de fabriquer plusieurs pièces de turbomachine, en suivant des étapes consistant à :
   a) couler le matériau métallique dans un moule de coulée centrifugée,
   b) en extraire une ébauche de forme allongée de préférence sensiblement cylindrique ou polyédrique et/ou à section circulaire ou polygonale, et
   c) usiner l'ébauche jusqu'à obtenir la forme finale de la pièce.

Des solutions par forgeage existent aussi, mais elles sont délicates à mettre en oeuvre en raison de la fragilité des alliages TiAl.

Un inconvénient de la fonderie pour des pièces à base de TiAl est la solidification très rapide du matériau fondu.

En découle un fort risque de porosité des pièces, de non remplissage convenable des moules et donc une mise au point délicate de la forme extérieure du brut de fonderie (ébauche).

En outre, une compression isostatique à chaud (CIC) est ensuite typiquement nécessaire pour refermer les éventuelles porosités, d'où des coûts importants. Au surplus, ce traitement n'est pas toujours suffisant, en particulier si les porosités du brut sont débouchantes.

Comme inconvénients de la fonderie à la cire perdue (moule non permanent), on peut noter :
- la nécessaire utilisation de matériaux rares pour la carapace du moule (tel l'Yttrium), avec des problèmes de coûts et d'approvisionnement,
- le risque de fragilisation des pièces via la formation d'inclusions : tant celles issues de la réactivité moule/carapace (spécifique au TiAl, car il très réactif) que celle issues des débris de carapace qui tombent dans les moules (spécifique au procédé de cire perdue),

- la mise au point très spécifique de la carapace, avec typiquement un compromis à trouver entre une résistance à la force de centrifugation et la friabilité de la carapace pour faciliter le démoulage,
- l'utilisation d'installations spécifiques pour une coulée par centrifugation.

D'autres points peuvent aussi être mentionnés :
- Inconvénients de la solution 1): lors du traitement thermique de compression isostatique à chaud (CIC) que cette solution nécessite, des contraintes résiduelles sont emmagasinées par la pièce. Des déformations non prévisibles sont trop souvent découvertes à l'usinage.
- Inconvénients de la solution 2) : on ne dispose pas, sur le brut de fonderie (l'ébauche), de suffisamment de surépaisseur de matière pour éviter les manques de matière sur la pièce finie si le brut est légèrement déformé et qu'on cherche à usiner cette pièce de façon automatisée. Un risque de non-respect des dimensions de la pièce finie existe en outre.
- Inconvénients solution 3) : une longue mise en oeuvre avant d'aboutir (en particulier s'il s'agit d'une aube) à un système optimisé moule + pièce ne conduisant ni à des retassures de tailles trop importantes, ni à une hétérogénéité chimique et macrostructurale de l'ébauche due à la solidification.

D'autres arts antérieurs proposent des solutions incomplètes ou non adaptées :
- dans WO 2014/057208, notamment la méthode de fabrication est différente de ce qui est proposé ci-après ; et il n'y a pas de détails sur les matériaux,
- dans WO2014057222, notamment la méthode de fabrication est également différente,
- et ni dans WO 01/622992, ni dans WO 2011/104795, il n'y a davantage de détails sur des matériaux d'alliage intermétallique TiAl, en liaison avec la fabrication de pièces métalliques de turbomachine.

Un objectif de l'invention est d'éviter ou de limiter nombre des problèmes ou inconvénients ci-avant évoqués.

Une solution pour cela est un procédé de fabrication d'au moins une pièce métallique de turbomachine, comprenant des étapes consistant à :
a) maintenir en fusion par torche(s) à plasma et dans un moule à fond escamotable (ou moule bague), un alliage intermétallique TiAl (titane-aluminium),
b) en extraire un lingot, brut de fonderie, dans un état refroidi de la fusion,
c) découper le lingot en au moins une ébauche de forme extérieure plus simple que celle, plus complexe, de ladite pièce à fabriquer,
d) et usiner l'ébauche pour obtenir la pièce avec ladite forme extérieure plus complexe.

Le terme "ébauche" doit s'entendre ici de manière assez large. Il désigne un produit non fini, mais dont la forme générale correspond pour l'essentiel à l'allure de la pièce finie. Ceci implique qu'une ébauche de pièce comme précitée est un produit métallique du type précité. Ceci n'exclut ni l'adaptation ultérieure de la forme de cette ébauche, par exemple par usinage, ni la modification de cette allure générale, par exemple par cintrage, pliage, ou toute autre déformation plastique. On doit plutôt comprendre qu'une "ébauche" d'un produit du type précité est une pièce de ce type qui peut subir différents traitements de mise en forme, d'usinage ou encore de surface pour donner naissance à un produit fini.

Pour compléter la solution ci-avant, il est conseillé :
- qu'à l'étape c), l'ébauche découpée, à partir de laquelle la pièce de l'étape d) est à usiner, présente un volume extérieur et/ou une masse déterminée(s), A1,
- qu'à l'étape d), la pièce usinée présente un volume extérieur et/ou une masse déterminée(s), A2, et
- que le rapport A2/A1 soit supérieur à 0.95.

Un objectif visé est un usinage visant des pertes réduites de matière Dans ce cadre et dans un cadre plus général d'économie de matière, il est par ailleurs recommandé :
- qu'à l'étape c), l'ensemble des ébauches découpées représente plus de 95% du volume extérieur et/ou de la masse du lingot extrait, et/ou
- à l'étape b), d'obtenir un lingot sensiblement cylindrique ou polyédrique.

Typiquement, les « moules bagues » évoqués ci-avant sont dénommés fours PAM (Plasma Arc Melting ; fusion par arc à plasma). Ces fours PAM sont habituellement, dans la technique connue, utilisés pour couler de la matière pour refusion, c'est-à-dire qu'après fusion de la matière dans le four PAM, cette matière se solidifie, puis est refondue pour être coulée. Les barreaux, ou lingots, coulés sont alors de très forts diamètres (notablement >à 200mm).

Or, pour respecter les exigences d'un barreau ou lingot brut de PAM, à utiliser en vue d'un usinage direct, il est apparu utile de faire évoluer le procédé PAM pour le rendre plus robuste et mieux à même de produire des lingots sans défauts.

Dans cette optique, il est ici proposé de couler des lingots PAM de plus petits diamètres où les phénomènes à l'origine des défauts sont plus facilement maîtrisables.

Ainsi est-il en pratique conseillé qu'à l'étape b) le lingot extrait présente un diamètre inférieur ou égal à 200mm ou une section inférieure à environ 32×10³ mm² à 5% près.

Appliquer l'élaboration PAM précitée en particulier sur de tels petits diamètres de lingots va permettre d'éviter les retassures et les ségrégations chimiques qui sont les deux principales difficultés techniques de la fonderie dans un moule permanent centrifugé, ceci avec une solidification qui se fera de manière séquentielle dans un volume réduit que l'on appelle puits de solidification.

En utilisant une telle voie PAM, on va donc pouvoir obtenir des semi-produits avec très peu de porosité et très homogènes.

Par ailleurs, en procédant à un traitement thermique en une ou plusieurs opérations, comme conseillé ci-après, on favorisera encore davantage l'obtention de la microstructure et des propriétés mécaniques désirées.

Ce traitement, appliqué a priori sur l'ébauche, comprendra favorablement :
- un traitement thermique pour obtenir une microstructure duplex constituée de grains gamma et de grains lamellaires (alpha2/gamma),
- et/ou un traitement thermique de préparation au CIC (Compactage Isostatique à Chaud) puis un CIC (pour refermer les porosités).

En alternative ou en complément, il est toutefois prévu que ce traitement post-PAM, sur une ébauche constituée d'un alliage TiAl à grains gamma ayant typiquement une composition contenant entre environ (à 5% près) 47 et 49 pourcent d'aluminium (en % atomique), soit comme suit:
- traitement thermique par chauffage à une température d'environ (à 5% près) 1038°C à 1149°C, pendant une durée d'environ 5 à environ 50 heures, le matériau subissant ensuite éventuellement une compression isostatique à chaud (CIC) à une température comprise entre 1185°C et 1204°C,
- puis autre traitement thermique à une température comprise entre environ 1018°C -1204°C (toujours à 5% près), sans CIC.

Si l'étape de mise en fusion et celle d'obtention du lingot sont bien menées il pourrait n'être pas nécessaire d'appliquer de la pression lors de la seconde étape du traitement thermique ci-dessus.

Dans le cadre global de ce qui précède, il est anticipé que les gammes comprenant la fabrication de barreaux ou lingots en vue d'un usinage direct, après découpe en ébauche(s) de forme simple lors de l'étape c), doivent être conçues de manière à respecter les exigences des pièces finales puisqu'elles sont dans ce cas reportées directement sur les ébauches. Les principales exigences sont :
- l'homogénéité chimique qui garantit l'homogénéité microstructurale et mécanique après traitement thermique,
- l'absence d'inclusion ou d'infondu (portion du matériau d'origine non fondu dans le four PAM),
- peu de porosités sur barreaux/ lingots bruts de coulée et de tailles inférieures au millimètre,
- pratiquement aucune porosité sur l'ébauche, après CIC (si cette compression a lieu).

Concernant l'ensemble déjà évoqué incluant :
- une ébauche d'une pièce de turbomachine en composé intermétallique TiAl à microstructure duplex constituée de grains gamma et de grains lamellaires (alpha2/gamma), pouvant avoir été obtenue à l'issue d'une mise en fusion par torche(s) à plasma, et
- une pièce usinée issue de l'usinage d'une telle ébauche,
il est prévu que, l'ébauche présentant un volume extérieur et/ou une masse déterminée(s), A1, et la pièce usinée présentant un volume extérieur et/ou une masse déterminée(s), A2, le rapport A2/A1 soit supérieur à 0.95 et inférieur à 1.

En corrélation avec ce qui précède, cet ensemble sera favorablement tel que l'ébauche présentera un diamètre inférieur ou égal à 200mm, et de préférence à 120mm, et une longueur inférieure à 300mm, de préférence comprise entre 220mm et 240mm.

Ceci favorisera une économie de matière, en particulier dans le cadre de la fabrication d'une aube.

Avant l'étape a) précitée de maintien en fusion de l'alliage, on pourra prévoir qu'une série de torches à plasma fasse fondre le composé intermétallique et le maintienne fondu.

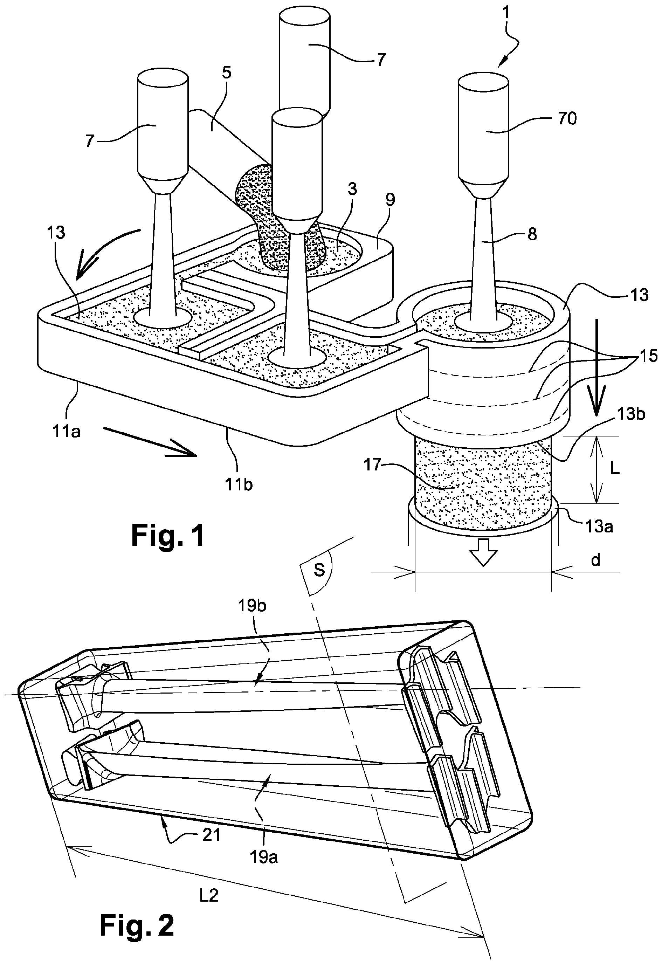

D'autres avantages et caractéristiques de l'invention apparaîtront encore à la lecture de la description suivante faite à titre d'exemple non limitatif et en référence aux dessins annexés où les figures 1 et 2 sont précises dimensionnellement et correspondent à une réalité industrielle, à l'image de plans côtés, et dans lesquels :
- la figure 1 schématise un four de fusion PAM d'où est extrait un lingot,
- la figure 2 est une vue schématique en perspective d'un bloc de matière, ou ébauche, issu(e) d'une découpe grossière du lingot extrait,
- et la figure 3 est un tableau qui présente et compare trois cas de fabrication d'une pièce métallique conforme à celles évoquées ci-avant, à destination d'une turbomachine, en particulier une aube de roue mobile de turbine d'un turboréacteur ou d'un turbopropulseur d'avion.

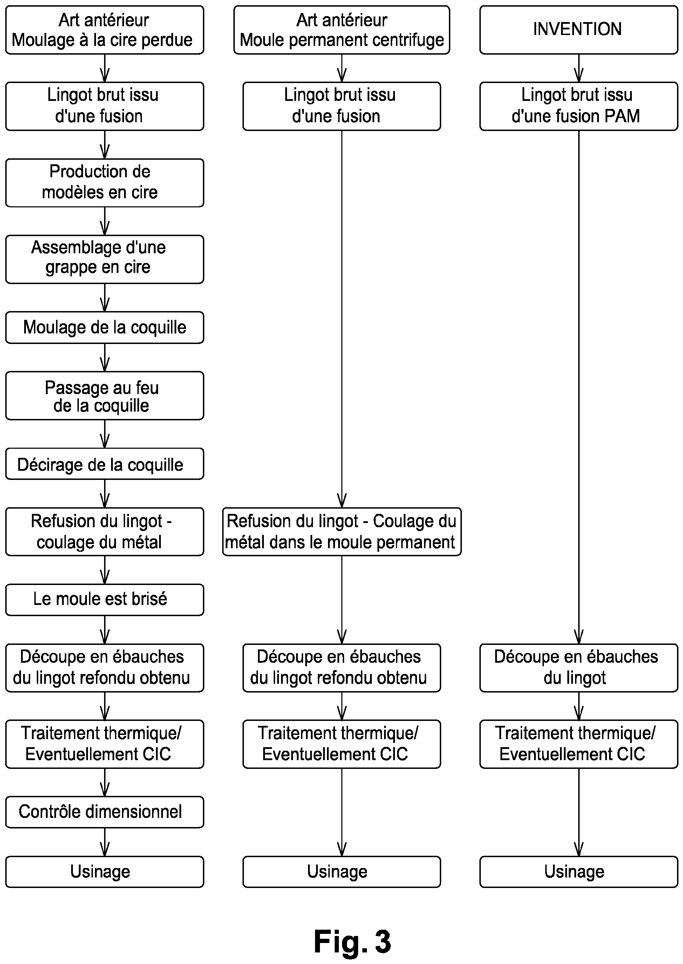

Dans la colonne de gauche de la figure 3 sont listées les étapes impliquant une refonte, avec moulage à la cire perdue (moule temporaire), d'un lingot brut issu d'une fusion (autre que PAM), à l'étape initiale.

Dans la colonne centrale sont listées les étapes impliquant aussi une refonte, avec moulage dans un moule centrifugé (moule permanent), d'un lingot brut issu d'une fusion (autre que PAM), à l'étape initiale.

Et dans la colonne de droite sont listées les étapes de la présente invention, sans moulage ni nécessairement refonte, après qu'un lingot brut issu d'une fusion PAM ait été obtenu à l'étape initiale.

Ainsi :
- dans l'art antérieur « moulage à la cire perdue », les étapes suivantes sont successivement conduites : obtention d'un lingot brut issu d'une fusion, puis production de modèles en cire, puis assemblage d'une grappe en cire, puis moulage de la coquille, puis passage au feu de la coquille, puis décirage de la coquille, puis refusion du lingot - coulage du métal, puis le moule est brisé, puis découpe en ébauches du lingot refondu obtenu, puis traitement thermique/éventuellement CIC, puis contrôle dimensionel et usinage ;
- dans l'art antérieur « moule permanent centrifuge » les étapes suivantes sont successivement conduites : obtention d'un lingot brut issu d'une fusion, puis refusion d'un lingot - coulage du métal dans le moule permanent, puis découpe en ébauche du lingot refondu obtenu, puis traitement thermique CIC et usinage ;
- dans l'art antérieur « invention » les étapes suivantes sont successivement conduites : obtention d'un lingot brut issu d'une fusion PAM, puis découpe en ébauche du lingot refondu obtenu, puis traitement thermique/éventuellement CIC et usinage.

La solution dans l'exemple privilégié de la colonne de droite consiste donc à limiter la fabrication de cette pièce à quatre étapes prévoyant :
a) de couler initialement un composé intermétallique TiAl dans un moule-bague (ou four PAM), avec mise en fusion par torche(s) à plasma,
b) d'en extraire un lingot, brut de fonderie, dans un état refroidi de la fusion,
c) de découper le lingot en au moins une ébauche de forme extérieure plus simple que celle, plus complexe, de ladite pièce à fabriquer,
d) d'usiner l'ébauche pour obtenir la pièce avec ladite forme extérieure plus complexe.

Comme schématisé figure 1, la fusion PAM 1 est ici réalisée avec une matière 3 qui est du TiAl, en l'espèce du TiAl 48-2-2, comprenant donc 48%Al 2%Cr 2%Nb, at%). Cette matière première est introduite par le biais d'un large canal 5 où la matière est déversée, comme montré figure 1. Une série de torches à plasma 7 fait fondre le métal apporté puis le maintient fondu. Il y a au moins une telle torche au-dessus de chaque bac ou récipient 9 et sole d'affinage 11a puis 11b, avec son faisceau tel 8 dirigé vers le métal dans le bac ou sole. La circulation (voir flèches) du bain de métal se fait de bac en bac. L'écoulement de la matière et le brassage du liquide permettent d'éviter les problèmes de ségrégation et de présence d'inclusion de métaux lourds (High Density Inclusion - HDI), ces problèmes étant bien connus dans la technologie classique d'un four à arc de refusion VAR (Vacuum Arc remelting). On peut ainsi envisager une seule fusion, alors que par le procédé VAR, il faut deux voire trois fusions successives (dites refusions). La technique PAM permet également de limiter l'apparition des inclusions de phase alpha (Hard Phase Inclusion - HAI).
Une dernière torche à plasma 70, placée au-dessus d'un moule ou bac final, y maintient en fusion le haut du bain arrivant des bacs 11a puis 11b. Ce bac final se présente comme un moule-bague 13. Le moule-bague 13 comprend un fond 13a escamotable ou mobile, par exemple à déplacement vertical contrôlé. Le moule-bague 13 est froid, typiquement refroidi par l'extérieur, par exemple à l'eau, via des moyens de refroidissement 15. Sous son ouverture de fond 13b, et ici par descente du fond mobile 13a, s'écoule, par gravité ou autre, le bas du bain alors suffisamment froid pour former un lingot 17, brut de fonderie, dans cet état refroidi de la fusion. Le moule-bague 13 peut être en cuivre.

En utilisant les différents bacs 9, soles d'affinage multiples, telles ici 11a, 11b, puis le moule-bague 13, avec des torches à plasma 7,70 également multiples et placées au-dessus de chacun de ces récipients, on optimisera le parcours de la matière, de manière à la fondre totalement et y maintenir une température sensiblement homogène. Réduire le nombre d'inclusions ou d'infondus sera aussi possible en utilisant, comme illustré, plusieurs bassins de surverse. Pour garantir une qualité encore supérieure, on pourra aussi prévoir de réaliser des fusions successives de la matière.

Typiquement, le lingot 17 obtenu sera sensiblement cylindrique ou polyédrique.

Pour favoriser le respect des exigences d'un barreau ou lingot 17 destiné à un usinage direct, donc sans moulage intermédiaire ni les inconvénients classiques des fonderies à la cire perdue (défauts issus d'interactions avec le moule qui est typiquement en céramique), ou autres défauts caractéristiques de l'élaboration par coulée dans des moules permanents centrifuges (retassures centrales et macro-ségrégation chimique, en particulier), il est ici proposé de couler des lingots de petites tailles, en particulier tels que chaque lingot 17 extrait présente une dimension transversale d (diamètre ou largeur pour une section carrée) inférieure ou égale à 200mm, et de préférence à 120mm, ou, en section, à environ 32×10³ mm² et 12×10³ mm² à 5% près, respectivement.

C'est ensuite dans un tel lingot brut de fonderie que l'on va directement découper (par des outils basiques) une et de préférence plusieurs ébauches 21, chacune de forme simple, en particulier de nouveau sensiblement cylindrique ou polyédrique et de toute façon de formeextérieure plus simple que celle, plus complexe, de chacune desdites pièces à fabriquer, résultat de l'usinage de chaque ébauche, telles les deux aubes 19a,19b que l'on voit par transparence dans l'ébauche 21 de la figure 2, en visant une utilisation maximale de la matière.

Cet objectif et une recherche d'optimisation des processus de fabrication notamment des aubes de turbine, avec un raccourcissement des temps de cycles a d'ailleurs conduit à préférer:
- que chaque ébauche 21 issue du lingot 17 présente une longueur L2 inférieure à 300mm, de préférence comprise entre 220mm et 240mm et une section S (perpendiculairement à sa longueur L2) inférieure ou égale à 12×10³mm² à 5% près (soit 1.2dm²),
- qu'à l'étape c), l'ensemble des ébauches 21 découpées représente plus de 95% du volume extérieur et/ou de la masse du lingot 17 extrait, et/ou :
- qu'à l'étape c), l'ébauche 21 découpée ; c'est-à-dire donc le bloc à partir duquel la pièce de l'étape d) (aube telle 19a ou 19b) est à usiner, présente un volume extérieur et/ou une masse déterminée(s), dénommée A1,
- qu'à cette étape d), la pièce usinée 19a ou 19b présente un volume extérieur et/ou une masse déterminée(s), dénommée A2, et
- que le rapport A2/A1 soit supérieur à 0.95 et inférieur à 1.

A la lecture du tableau ci-avant Il n'aura par ailleurs pas échappé qu'entre l'étape de découpe en ébauches du lingot et l'usinage de chaque ébauche interviendra de préférence un traitement thermique (à séquence(s) unique ou multiples) de chacune de ces ébauches.

Comme déjà indiqué, un but sera de favoriser par-là l'atteinte des critères mécaniques et de microstructure attendus.

De fait, il est recommandé de réaliser :
- un traitement thermique pour que le matériau de l'ébauche ait une microstructure duplex constituée de grains gamma et de grains lamellaires (alpha2/gamma),
- et/ou un traitement thermique de préparation au CIC (Compactage Isostatique à Chaud) puis un CIC (pour refermer les porosités).

Un but étant donc d'obtenir une microstructure duplex (composé intermétallique) constitué(e) de grains gamma et de grains lamellaires (alpha2/gamma), il est en pratique conseillé de procéder comme suit (avec des valeurs fournies à 5% près) :
- un alliage TiAl à grains gamma, en particulier celui précité et issu du four PAM 1, ayant typiquement une composition contenant entre environ 47 et 49 pourcent d'aluminium, (en % atomique) subit un traitement thermique à une température d'environ 1035 DEG C (°C) à environ 1150 DEG C, pendant une durée d'environ 5 à environ 50 heures,
- puis il subit un autre traitement thermique à une température comprise entre environ 1000 DEG C - 1220 DEG C.

Entre les deux étapes de ce traitement thermique, le matériau aura pu en outre subir une compression isostatique à chaud (CIC) à une température d'environ 1200 DEG C, de préférence comprise entre 1185°C et 1204°C.

## Revendications

1. Procédé de fabrication d'au moins une pièce (19a,19b) métallique de turbomachine, comprenant des étapes consistant à :
a) maintenir en fusion, par torche(s) à plasma (70) et dans un moule-bague (13), un composé intermétallique titane-aluminium,
b) en extraire un lingot (17), brut de fonderie, dans un état refroidi de la fusion,
c) découper le lingot en au moins une ébauche (21) de forme extérieure plus simple que celle, plus complexe, de ladite pièce (19a,19b) à fabriquer,
d) usiner l'ébauche (21) pour obtenir la pièce avec ladite forme extérieure plus complexe.

2. Procédé selon la revendication 1 où :
- à l'étape c), l'ébauche (21) découpée, à partir de laquelle la pièce de l'étape d) est à usiner, présente un volume extérieur et/ou une masse déterminée(s), A1,
- à l'étape d), la pièce usinée (19a,19b) présente un volume extérieur et/ou une masse déterminée(s), A2, et
- le rapport A2/A1est supérieur à 0.95.

3. Procédé selon la revendication 1 ou 2, où à l'étape c), l'ensemble des ébauches (21) découpées représente plus de 95% du volume extérieur et/ou de la masse du lingot extrait (17)

4. Procédé selon l'une des revendications 1 à 3, où l'étape b) d'obtenir un lingot (17) comprend l'obtention d'un lingot sensiblement cylindrique ou polyédrique.

5. Procédé selon l'une des revendications 1 à 4, où à l'étape b) le lingot extrait (17) présente un diamètre inférieur ou égal à 200mm, ou une section inférieure à environ 32×10³mm².

6. Procédé selon l'une des revendications précédentes, où l'étape a) de mise en fusion comprend la mise en fusion d'un alliage TiAl 48-2-2 comprenant 48%Al 2%Cr 2%Nb (at%).

7. Procédé selon l'une des revendications 1 à 6 qui comprend en outre :
- un traitement thermique pour obtenir une microstructure duplex constituée de grains gamma et de grains lamellaires (alpha2/gamma),
- et/ou un traitement thermique de préparation à un Compactage Isostatique à Chaud suivi d'un tel Compactage Isostatique à Chaud.

8. Procédé selon la revendication 7 quand elle se rattache à l'une des revendications 1 à 5, où un alliage TiAl à grains gamma ayant une composition contenant entre environ 47 et 49 pourcent d'aluminium, (en % atomique) subit :
- un traitement thermique par chauffage à une température d'environ 1038°C à 1149°C, pendant une durée d'environ 5 à 50 heures,
- puis une compression isostatique à chaud (CIC) à une température comprise entre 1185°C et 1204°C.

9. Procédé selon la revendication 8, où l'étape de compression isostatique à chaud est suivie d'un autre traitement thermique à une température comprise environ entre 1018°C et 1204°C

10. Procédé selon l'une des revendications 1 à 5, ou la revendication 7 quand elle se rattache à l'une des revendications 1 à 5, où un alliage TiAl à grains gamma ayant une composition contenant entre environ 47 et 49 pourcent d'aluminium (en % atomique), subit :
- un traitement thermique par chauffage à une température d'environ 1038°C à 1149°C, pendant une durée d'environ 5 à 50 heures,
- puis autre traitement thermique à une température comprise entre environ 1018°C -1204°C, sans compression isostatique à chaud.

11. Procédé selon l'une des revendications précédentes où, avant l'étape a) de maintien en fusion du composé intermétallique dans le moule-bague (13), une série de torches à plasma (7) fait fondre le composé intermétallique puis le maintient fondu.

## Patentansprüche

1. Verfahren zur Herstellung zumindest eines metallischen Werkstücks (19a, 19b) für Turbomaschinen bzw. Turbotriebwerke, mit folgenden Schritten:
a) Aufrechterhalten der Schmelze einer intermetallischen Titan-AluminiumVerbindung in einer Ringgussform (13) mittels Plasmabrenner(n) (70),
b) Entnehmen eines rohgegossenen Blocks (17) im abgekühlten Zustand aus der Schmelze,
c) Zuschneiden des Blocks zu mindestens einen Rohling (21) mit einer Außenform, die einfacher ist als die komplexere Form des herzustellenden Werkstücks (19a, 19b),
d) Bearbeiten des Rohlings (21), um das Werkstück mit der komplexeren Außenform zu erhalten.

2. Verfahren nach Anspruch 1, wobei:
- in Schritt c) der zugeschnittene Rohling (21), aus dem das Werkstück in Schritt d) herausgearbeitet werden soll, ein bestimmtes Außenvolumen und/oder eine bestimmte Masse A1 aufweist,
- in Schritt d) das bearbeitete Werkstück (19a, 19b) ein bestimmtes Außenvolumen und/oder eine bestimmte Masse A2 aufweist und
- das Verhältnis A2/A1 größer als 0,95 ist.

3. Verfahren nach Anspruch 1 oder 2,
wobei in Schritt c) die Gesamtheit der zugeschnittenen Rohlinge (21) mehr als 95 % des Außenvolumens und/oder der Masse des entnommenen Blocks (17) ausmacht.

4. Verfahren nach einem der Ansprüche 1 bis 3,
wobei Schritt b) der Gewinnung eines Blocks (17) das Gewinnen eines im Wesentlichen zylindrischen oder polyedrischen Blocks umfasst.

5. Verfahren nach einem der Ansprüche 1 bis 4,
wobei in Schritt b) der entnommene Block (17) einen Durchmesser von weniger als oder gleich 200 mm oder einen Querschnitt von weniger als etwa 32×10³ mm² aufweist.

6. Verfahren nach einem der vorhergehenden Ansprüche,
wobei Schritt a) des Schmelzens das Schmelzen einer TiAl 48-2-2-Legierung umfasst, die 48%AI 2%Cr 2%Nb (in Atom-%) enthält.

7. Verfahren nach einem der Ansprüche 1 bis 6, ferner umfassend:
- eine Wärmebehandlung, um eine Duplex-Mikrostruktur zu erhalten, die aus Gamma-Körnern und lamellaren Körnern (alpha2/gamma) besteht,
- und/oder eine Wärmebehandlung zur Vorbereitung auf eine heißisostatische Verdichtung, gefolgt von einer solchen heißisostatischen Verdichtung.

8. Verfahren nach Anspruch 7, rückbezogen auf einen der Ansprüche 1 bis 5,
wobei bei einer gamma-körnigen TiAI-Legierung mit einer Zusammensetzung, die zwischen etwa 47 und 49 Prozent Aluminium (in Atom-%) enthält, erfolgt:
- eine Wärmebehandlung durch Erhitzen auf eine Temperatur von etwa 1038 °C bis 1149 °C für eine Dauer von etwa 5 bis 50 Stunden,
- dann ein heißisostatisches Pressen (CIC) bei einer Temperatur zwischen 1185 °C und 1204 °C.

9. Verfahren nach Anspruch 8,
wobei auf den Schritt des heißisostatischen Pressens eine weitere Wärmebehandlung bei einer Temperatur zwischen etwa 1018 °C und 1204 °C folgt.

10. Verfahren nach einem der Ansprüche 1 bis 5 oder Anspruch 7, rückbezogen auf einen der Ansprüche 1 bis 5,
wobei bei einer gamma-körnigen TiAI-Legierung mit einer Zusammensetzung, die zwischen etwa 47 und 49 Prozent Aluminium (in Atom-%) enthält, erfolgt:
- eine Wärmebehandlung durch Erhitzen auf eine Temperatur von etwa 1038 °C bis 1149 °C für eine Dauer von etwa 5 bis 50 Stunden,
- dann eine weitere Wärmebehandlung bei einer Temperatur zwischen etwa 1018 °C - 1204 °C, ohne heißisostatisches Pressen.

11. Verfahren nach einem der vorhergehenden Ansprüche,
wobei vor dem Schritt a) des Aufrechterhaltens der Schmelze der intermetallischen Verbindung in der Ringgussform (13) die intermetallische Verbindung von einer Reihe von Plasmabrennern (7) zum Schmelzen gebracht und dann in der Schmelze gehalten wird.

## Claims

1. A method for manufacturing at least one metal turbomachine part (19a, 19b), comprising steps consisting of:
a) keeping a titanium-aluminium intermetallic alloy molten by plasma torch (70) in a ring mould (13),
b) extracting therefrom an ingot (17), as cast, in a state cooled from molten,
c) cutting the ingot into at least one blank (21) with an external shape that is simpler than the more complex one of said part (19a, 19b) to be manufactured,
d) machining the blank (21) in order to obtain the part with said more complex external shape.

2. A method according to claim 1, wherein:
- at step c), the cut blank (21), from which the part of step d) is to be machined, has a given external volume and/or mass A1,
- at step d), the machined part (19a, 19b) has a given external volume and/or mass A2, and
- the ratio A2/A1 is greater than 0.95.

3. A method according to claim 1 or claim 2, wherein, at step c), all the cut blanks (21) represent more than 95% of the external volume and/or of the mass of the extracted ingot (17).

4. A method according to any of claims 1 to 3, wherein step b) of obtaining an ingot (17) comprises the obtaining of a substantially cylindrical or polyhedral ingot.

5. A method according to any of claims 1 to 4, wherein, at step b), the extracted ingot (17) has a diameter of less than or equal to 200 mm, or a cross section of less that approximately 32×10 ³ mm².

6. A method according to any of the preceding claims, wherein the melting step a) comprises the melting of a 48-2-2 TiAl alloy comprising 48%AI 2%Cr 2%Nb (at%).

7. A method according to any of claims 1 to 6, which further comprises:
- heat treatment for obtaining a duplex microstructure consisting of gamma grains and lamellar grains (alpha2/gamma),
- and/or heat treatment for preparation for hot isostatic compacting followed by such hot isostatic compacting.

8. A method according to claim 7 when it is dependent on one of claims 1 to 5, wherein a TiAl alloy with gamma grains having a composition containing between approximately 47 and 49 percent aluminium (at%) undergoes:
- heat treatment by heating to a temperature of approximately 1038°C to 1149°C, for a period of approximately 5 to 50 hours,
- then hot isostatic compression (HIC) at a temperature of between 1185°C and 1204°C.

9. A method according to claim 8, wherein the hot isostatic compression step is followed by another heat treatment at a temperature of between approximately 1018°C and 1204°C

10. A method according to any of claims 1 to 5, or claim 7 when it is dependent on one of claims 1 to 5, wherein a TiAl alloy with gamma grains having a composition containing between approximately 47 and 49 percent aluminium (at%), undergoes
- heat treatment by heating to a temperature of approximately 1038°C to 1149°C, for a period of approximately 5 to 50 hours,
- then another heat treatment at a temperature of between approximately 1018°C and 1204°C, without hot isostatic compression.

11. A method according to any of the preceding claims, wherein, before step a) of keeping the intermetallic compound molten in the ring mould (13), a series of plasma torches (7) melts the intermetallic compound and then keeps it molten.
